Europäisches Patentamt

(19) European Patent Office    (11) Publication number: **0 070 398**

Office européen des brevets                              **A2**

# (12) EUROPEAN PATENT APPLICATION

(21) Application number: **82105402.0**    (51) Int. Cl.³: **G 01 K 3/00**

(22) Date of filing: **19.06.82**

(30) Priority: **08.07.81 IT 5342781 U**

(71) Applicant: **INDESIT INDUSTRIA ELETTRODOMESTICI
ITALIANA S.p.A., Str. Piossasco Km 17, I-10040 Rivalta
Turin (IT)**

(43) Date of publication of application: **26.01.83
Bulletin 83/4**

(72) Inventor: **Alluto, Luigi, Strada S. Brigida, 37/4,
I-10024 Moncalieri (Torino) (IT)**

(74) Representative: **Prato, Roberto et al, c/o Ingg. Carlo e
Mario Torta Via Viotti 9, I-10121 Torino (IT)**

(84) Designated Contracting States: **DE FR IT**

(54) **A temperature indicator device for refrigerator apparatus.**

㊗ A temperature indicator device for refrigerator apparatus having at least one freezer compartment suitable for the preservation of frozen foods is described.

The main characteristic of this device lies in the fact that it provides an indication of the achievement in the freezer compartment of the temperature selected by the user, by comparison means (5) for comparing the temperature in the freezer compartment with the selected temperature, which means control indicator means (9) for indicating if the temperature in the freezer compartment is substantially coincident or less than the selected temperature, or else if the temperature in the freezer compartment is substantially greater than that selected.

- 1 -

A temperature indicator device for refrigerator apparatus

The present invention relates to a temperature indicator device for refrigerator apparatus including at least one freezer compartment suitable for the preservation of frozen foods, a compressor for compressing the refrigerant fluid, a condenser for condensing the refrigerant fluid coming from the compressor, at least one capillary tube for the expansion of the refrigerant fluid coming from the condenser, at least one evaporator for the evaporation of the refrigerant fluid coming from the capillary tube, and a return duct connecting the output of the evaporator to the input of the compressor. One of the current requirements for refrigerator apparatus is that of giving the user an indication of the temperature within the refrigerator cabinet, primarily relating to the freezer or the frozen food compartment in combined or double door refrigerator apparatus. In fact, the said apparatus must preserve foods generally for a long time and at a determined temperature, for which reason it is essential that the user should be continuously provided with discrete information on the internal temperature within

- 2 -

the compartment itself such as, for example, if the selected temperature has been reached, if it is maintained at the desired level or else if, because of a power failure or other accidental causes, it is exceeded, or if the maximum admissible limit for the correct preservation of the foods has been definitely exceeded.

To provide such temperature indication the said apparatus could be provided with a conventional thermometer, but with such thermometers it would be necessary to open the refrigerator each time to find out the temperature with evident disadvantages and loss of cold air. To overcome these disadvantages it would be possible to use electronic thermometers, but their cost would be considerable.

Therefore the object of the present invention is that of overcoming the above mentioned disadvantages and providing a temperature indicator device for the freezer compartment of a refrigerator apparatus which "signals" to the user when the selected temperature has been achieved, if this temperature is maintained at the predetermined level or exceeded, and also if a maximum allowable limit is exceeded.

Further objects of the present invention are that the said device should be of low cost and sufficiently precise and reliable. To achieve these objects the subject of the present invention is a temperature indicator device for refrigerator apparatus including at least one refrigerator compartment suitable for the preservation of frozen foods, a compressor for compressing the refrigerant fluid, a condenser for condensing the refrig-

- 3 -

ant fluid coming from the compressor, at least one
capillary tube for the expansion of the regrigerant
fluid coming from the condenser, at least one evaporator
for evaporating the refrigerant fluid coming from the
capillary tube, a return duct connecting the output of
the evaporator with the input of the compressor,
characterised by the fact that there is provided an
indication of the achievement and maintenance of the
temperature selected by the user for the freezer
compartment, by comparison means which compares the
temperature in the freezer compartment with the selected
temperature, and which control indicator means for
indicating if the temperature of the cooling compartment is practically coincident or less than the
selected temperature or else if the temperature in
the cooling compartment is substantially greater than
the selected temperature.

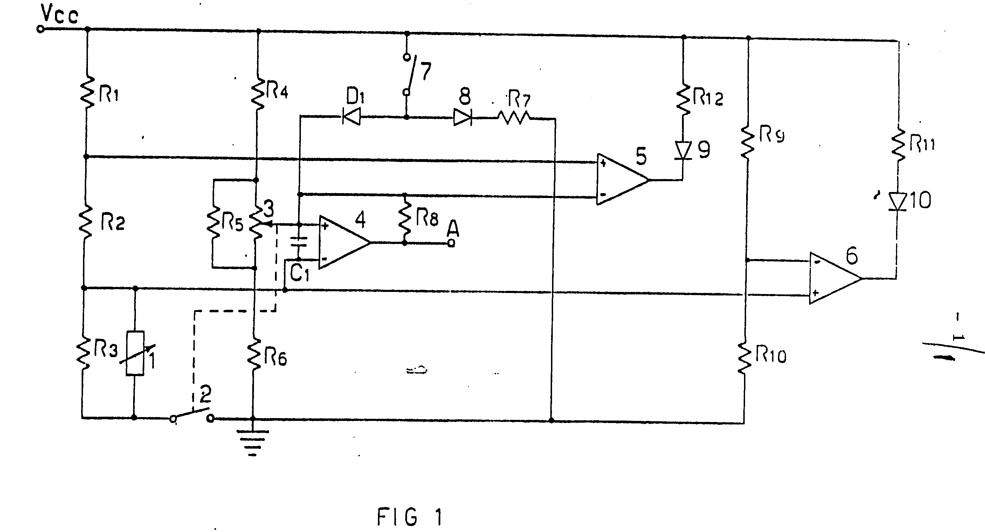

Further objects and advantages of the present invention
will become clear from the detailed description which
follows, and from the attached drawings given purely
by way of explanatory and non limitative example, in
which in Figure 1 there is illustrated an electronic
circuit diagram employed in the device forming the
subject of the present invention. In this drawing
there can be seen a resistance $R_1$ one end of
which is connected to the supply $V_{CC}$ and the other of
the ends of which is connected to the non inverting
input of a threshold comparator 5 and to one end
of a resistor $R_2$ the other end of which is connected to the inverting input of a threshold comparator
4 and to the non inverting input of a threshold comparator 6, and to one end of a resistor $R_3$ and to
one end of a resistor having a negative temperature coefficient "NTC" 1 which is positioned in the frozen food compartment and is suitably "ballasted" in such a way that its temperature substantially reproduces the temperature of the frozen food compartment. The other two ends of the resistor $R_3$ and the NTC 1 are connected to a common conductor.

A resistor $R_4$ one end of which is connected to the supply $V_{CC}$ and the other end of which is connected to one end of a resistor $R_5$ and to an end terminal of a potentiometer 3 (which includes a switch 2) the other end terminal of which is connected to the other end of the resistor $R_5$ and to one end of a resistor $R_6$, the other end of which is connected to earth. The switch 2 is located between the common conductor and earth and serves to earth the said common conductor.

This switch, which we will call the "energy saver" is normally closed and is an integral part of the potentiometer 3. The central terminal of the potentiometer 3, which is connected to the wiper of the potentiometer, is connected to the non-inverting input of the threshold comparator 4 to which there are also connected the inverting input of the threshold comparator 5, the cathode of a diode $D_1$, and one end of a resistor $R_8$ (which provides the hysteresis for the threshold comparator 4) the other end of which is connected to the output of the same threshold comparator 4. The said output indicated with the letter "A" goes to control a thermostat circuit not shown in the drawings.

The anode of the diode $D_1$ is connected to the anode of a light emitting diode (LED)8 and to one contact of a normally open switch 7 which we will call the "fast freezer", the other contact of which is connected to the supply $V_{CC}$. The cathode of the LED 8 is connected to one end of a resistor $R_7$ the other end of which is connected to earth. The output of the threshold comparator 5 is connected to the cathode of a light emitting diode 9 the anode of which is connected to a terminal of a resistor $R_{12}$ the other terminal of which goes to supply $V_{CC}$. A resistor $R_9$ is connected at one end to the supply $V_{CC}$ and at the other end to one end of a resistor $R_{10}$ the other end of which is connected to earth and to the inverting input of the threshold comparator 6, the output of which goes to the cathode of a light emitting diode 10 the anode of which is connected to one end of a resistor $R_{11}$ and the other end of which is connected to the supply $V_{CC}$.

The operation of the circuit described above is as follows: the NTC 1 senses the temperature in the freezer compartment and together with the resistive network $R_1$, $R_2$, and $R_3$ provides a voltage proportional to the said temperature to the three threshold comparators 4, 5 and 6, in particular directly to the terminals of the inverting inputs of the threshold comparator 4 and the non-inverting input of the threshold comparator 6, and indirectly, via the resistor $R_2$, to the non-inverting input of the threshold comparator 5.

A voltage proportional to the temperature selected by the user is supplied to the non-inverting input terminal of the threshold comparator 5 via the potentiometer 3 and the resistive network $R_4$, $R_5$ and $R_6$. A suitable fixed reference voltage is supplied by the divider formed by resistors $R_9$ and $R_{10}$ to the inverting terminal of the threshold comparator 6. The threshold comparator with hysteresis 4 is the element which controls the temperature within the compartment, whilst the other two comparators serve to supply indications to the user.

As pointed out already, the voltage at the inputs of the non-inverting terminal of the threshold comparator 5 depends on the resistance value of the NTC 1 and, consequently, on the temperature of the cooling compartment, whilst the voltage at the inputs of the inverting terminal depends on the temperature chosen by the user. Furthermore, the values of the resistors $R_1$, $R_2$ and $R_3$ are chosen in such a way that the otuput of the threshold comparator 5 becomes low and therefore causes current to circulate in the LED 9 thereby lighting it up when the temperature of the cooling compartment has fallen to the riconnection temperature of the compressor (dependent on the temperature chosen by the user) with a difference of $2^{\circ}C$ or to a lower temperature . The $2^{\circ}C$ of difference are a tolerance value  deemed to be acceptable, which is imparted by acting onto the value of the resistor $R_2$.

For example, if the user has chosen a temperature of $-18^{\circ}C$ when the compartment reaches $-16^{\circ}C$, the LED 9 lights up and remains lighting even if the temperature should fall further. The said LED 9 becomes extinguished only when the temperature in the said compartment again exceeds -16°C.

In this way the user has an indication of the achievement of the temperature (LED 9 illuminated), of the maintenance of that temperature (LED 9 still illuminated) and of the exceeding of the said temperature (LED 9 extinguished). The fact that the LED 9 remains illuminated even if the temperature in the freezer compartment is less than that chosen by the user does not create any disadvantage in that it does not matter if the foods being preserved are cooled to a lower temperature, on the other hand the thermostat circuit, not shown in the drawings, provides for the maintenance of the temperature within the limits chosen by the user.

The function of the resistor $R_8$ is also to be noted, this provides a variable reference value to the non-inverting input of the threshold comparator 5, providing it with the same hysteresis as the threshold comparator 4.

The values of the resistors $R_9$ and $R_{10}$ are on the other hand chosen in such a way that the output of the threshold comparator 6 becomes low and therefore causes a current to flow in the LED10, illuminating it when the temperature in the cooling compartment becomes greater than -10°C. In this way the user has an indication (LED10 illuminated) that the temperature level in the cooling compartment has risen above that at which the frozen foods can deteriorate.

When the "energy saver" key 2 (which is normally closed) is open the supply voltage $V_{CC}$ is passed to the inverting input of the threshold comparator 4, and this simulates a condition of "very cold" in the refrigerator compartment so that the output of the said threshold comparator 4 is such as to make the thermostat circuit block the operation of the said compartment. In this way, in the case of a combined or two-door refrigerator apparatus the operation of the fresh food compartment is continued thereby obtaining a saving of energy when-ever there are no frozen foods to preserve. When the "fast freeze" key 7 (which is normally open) is closed, the supply voltage $V_{cc}$ is supplied to the non-inverting input of the threshold comparator 4 and this simulates a condition of "very warm" in the cooling compartment so that the output of the said threshold comparator 4, through the thermostat circuit, makes the said compartment operate continuously, and at the same time the LED 8 is also supplied with current and becomes illuminated.

With this operation, indicated by the illumination of the LED 8, when fresh foods to be frozen are put into the refrigerator the minimum freezing time is obtained.

It is to be noted, finally, that the NTC 1 is positioned within the freezer compartment and "ballasted" so that it substantially detects the temperature of the said compartment but does not feel the effects of the temperature changes due to the opening and closing of the door of the refrigerator apparatus thereby allowing the knob of the potentiometer 3 to be directly calibrated in degrees centigrade, which potentiometer as already seen, regulates the temperature within the freezer compartment.

From the above description the advantages of the temperature indicator device forming the subject of the present invention ion will be clear.

In particular there are shown the possibilities of having an indication which is sufficiently precise for the purposes which it serves, of the achievement of the selected temperature, of the maintenance of this or a lower level of temperature during the preservation phase, of the indication of the exceeding of a maximum admissible limit, at a very low cost for a reliable device.

It is clear that numerous variations are possible to the temperature indicator device described by way of example, without by this departing from the scope of the principles of novelty inherent in the inventive idea.

Dr. Ing. Roberto PRATO

Claims:

1. A temperature indicator device for refrigerator apparatus including at least one freezer compartment adapted for preserving frozen foods, a compressor for compressing the refrigerant fluid, a condenser for condensing the refrigerant fluid coming from the compressor, at least one capillary tube for the expansion of the refrigerant fluid coming from the condenser, at least one evaporator for the evaporation of refrigerant fluid coming from the capillary tube, a return duct connecting the output of the evaportaor to the input of the compressor, characterised by the fact that to provide an indication of the achievement and maintenance of the temperature selected by the user in the freezer compartment there are provided comparison means (3,4,5) for comparing the temperature in the freezer compartment with the selected temperature, which comparison means (3,4,5) control indicator means (9,10) for indicating if the temperature of the freezer compartment is substantially coincident or less than the selected temperature, or if the temperature of the freezer compartment is substantially greater than the selected temperature.

2. A temperature indicator device for refrigerator apparatus, according to Claim 1, characterised by the fact that the said device also provides an indication (10) that a maximum admissible temperature level in the said freezer compartment has been exceeded, by means of further comparison means (6) for comparing the temperature in the freezer compartment with the said admissible temperature limit, and for controlling alarm means (10, $R_{11}$) if the said level is exceeded.

3. A temperature indicator device for refrigerator apparatus, according to Claims 1 and 2, characterised by the fact that the said indications of achievement, maintenance or exceeding of a given temperature level in the said freezer compartment are obtained with the use of indicator means (8,9,10) of illuminable type.

4.  A temperature indicator device for refrigerator apparatus, according to Claim 1, characterised by the fact that the said comparison means include a threshold voltage comparator (5) which receives at its input terminals a variable reference voltage set by the user and a voltage related to the temperature in the freezer compartment, formed by a sensor element (1) positioned in the freezer compartment and the resistance of which varies as a function of the temperature, and a voltage divider $(R_1, R_2, R_3)$ of which the said element forms part.

5.  A temperature indicator device for refrigerator apparatus, according to Claim 4, characterised by the fact that the output of the said threshold voltage comparator (5) commutes to a voltage value such as to allow the illumination of a light emitting diode (9) forming part of the said indicator means when the temperature in the freezer compartment is practically equal to or less than the temperature selected by the user.

6.  A temperature indicator device for refrigerator apparatus according to Claim 5, characterised by the fact that the said commutation of the output voltage of the said threshold voltage comparator (5) takes place when the temperature in the freezer compartment is less than or equal to less than two degrees centigrade from the temperature selected by the user.

7.  A temperature indicator device for refrigerator apparatus, according to Claim 4, characterised by the fact
that the said variable voltage set by the user is also
supplied to an input terminal of a main threshold voltage comparator(4) which serves to regulate the temperature in the said freezer compartment.

8. A temperature indicator device for refrigerator
apparatus, according to Claim 7, characterised by the
fact that the said main threshold voltage comparator (4)
is provided with feedback means $(R_8)$ which give the
comparator a degree of hysteresis.

9. A temperature indicator device for refrigerator
apparatus, according to Claim 8, characterised by the
fact that the said feedback means $R_8$- also influence
the said threshold voltage comparator (5).

10. A temperature indicator device for refrigerator
apparatus, according to Claim 4, characterised by the
fact that the said voltage related to the temperature inthe
compartment is also supplied to the said main threshold
voltage comparator (4) by manipulation means.

11. A temperature indicator device for refrigerator
apparatus, according to Claim 10, characterised by the
fact that the said manipulation means alter the value of
the said voltage related to the temperature in the freezer
compartment by means of a voltage divider $(R_2,R_3)$.

12. A temperature indicator device for refrigerator
apparatus, according to Claim 10, characterised by the
fact that the said manipulation means influence the
precision with which the said comparison means detect the
coincidence or otherwise between the temperature in the freezer compartment and the temperature selected by the
user.

13.  A temperature indicator device for refrigerator
apparatus, according to Claim 2, characterised by the
fact that the said further comparison means comprise a
threshold voltage comparator (6) the output of which
commutes to a voltage value such as to allow the
illumination of a light emitting diode (10) forming part
of the said alarm when the temperature in the freezer compartment becomes greater than the said maximum admissible
limit.

14.  A temperature indicator device for refrigerator
apparatus, according to Claim 13, characterised by the
fact that the said maximum admissible limit is $-10^{O}C$.

15.  A temperature indicator device for refrigerator
apparatus, according to Claim 10, characterised by the
fact that it includes a switch (2) which when open raises
the input of the said main threshold voltage comparator
(4) which receives the said voltage relating to the
temperature in the freezer compartment to the supply
voltage $V_{CC}$, which simulates a "very cold" condition in
the freezer compartment, and which, via a thermostat
circuit, stops the refrigeration in the said freezer
compartment.

16.  A temperature indicator device for refrigerator apparatus, according to Claim 7, characterised by the fact
that it includes a switch (7) which when closed raises the
input of the said main threshold voltage comparator (4)
which receives the said variable reference voltage set by
the user to the supply voltage $V_{CC}$, which simulates a

- 14 -

"very warm" condition in the cooling compartment and thus, via a thermostat circuit, continuously cools the said refrigerator compartment allowing a rapid freezing operation.

17. A temperature indicator device for refrigerator apparatus, according to Claim 16, characterised by the fact that it includes a light emitting diode (8) which is illuminated when the said switch (7) is closed.

18. A temperature indicator device for refrigerator apparatus, according to Claim 4, characterised by the fact that the said sensor element includes a resistor (1) having a negative temperature coefficient, which is located in the said freezer compartment in a ballasted manner in such a way that it detects the real temperature of the said freezer compartment in this way allowing the direct calibration in degrees centigrade of the knob of a temperature adjusting potentiometer (3) which serves for the variation of the said variable reference voltage set by the user.

Dr. Ing. Roberto PRATO

0070398

FIG 1

Dr. Ing. Roberto PRATO